# EUROPÄISCHE PATENTSCHRIFT

(11) **EP 1 343 989 B1**
(45) Veröffentlichungstag und Bekanntmachung des Hinweises auf die Patenterteilung: **05.04.2006**
(21) Anmeldenummer: 01985324.1
(22) Anmeldetag: 19.12.2001
(51) Int. Cl.: F16J 15/32

(54) **RADIALWELLENDICHTUNG MIT ZWEI DICHTLIPPEN**
ROTARY SHAFT SEAL WITH TWO SEALING LIPS
JOINT POUR ARBRE TOURNANT COMPRENANT DEUX LEVRES D'ETANCHEITE

(30) Priorität: 22.12.2000 DE 20021808 U
(43) Veröffentlichungstag der Anmeldung: 17.09.2003
(73) Patentinhaber: VR Dichtungen GmbH, 52531 Übach-Palenberg (DE)
(72) Erfinder: KREUTZER, Siegmar, 6418 KK Heerlen (NL)
(74) Vertreter: Stachow, Ernst-Walther
(86) Internationale Anmeldenummer: PCT/DE2001/004775
(87) Internationale Veröffentlichungsnummer: WO 2002/052180

(56) Entgegenhaltungen:
- EP-A- 0 706 001
- DE-U- 8 812 628
- US-A- 4 623 153

## Beschreibung

Die Erfindung betrifft eine Radialwellendichtung mit zwei Membrankörpern, die über einen Stützkörper gezogen sind und beabstandete Dichtmembranen mit Dichtlippen, die an die zu dichtende Welle anlegbar sind, aufweisen.

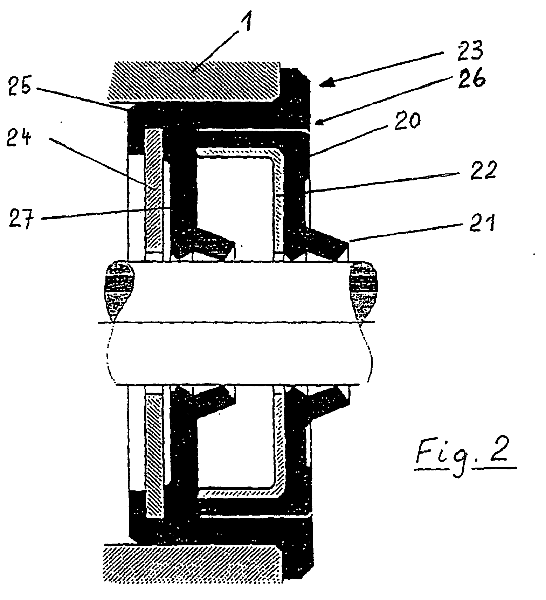

Wellenabdichtungssysteme mit Radialwellendichtungen, bei denen die gegen die Druckrichtung schräg gestellte Dichtlippe einer Dichtmembran an die zu dichtende Welle anlegbar ist, sind bekannt, beispielsweise aus der EP-A1-07 06 001. Häufig werden in einem Dichtungssystem zwei Dichtmembranen kombiniert, beispielsweise, wenn man eine Reservedichtung für den Fall wünscht, dass die erste Dichtung, etwa durch Einfangen von Partikeln zwischen Dichtlippe und Welle, versagt. Um eine geringe Bautiefe zu erreichen, wurden anstelle einfacher Hintereinanderreihung einfacher Systeme auch integrierte Systeme mit zwei Dichtmembranen vorgeschlagen. Ein solches System beschreibt die genannte europäische Patentanmeldung, gemäß dem einleitenden Teil des Anspruchs 1. Hier ist eine erste Dichtmembran eines ersten Membrankörpers auf einer Druckabstützung gestützt und ein zweiter, einen Stützkörper enthaltender Membrankörper von der Druckseite her in den ersten Membrankörper eingelegt (siehe Figur 2).

Nachteilig bei dieser Anordnung ist, dass auf der Druckseite ein Spalt zwischen dem äußeren ersten und dem inneren zweiten Membrankörper vorhanden ist, der sich unter der Einwirkung des unter Druck stehenden Fluids zu Kanälen öffnen kann, wodurch die Dichtwirkung der zweiten Dichtmembran aufgehoben wird. Dieses Problem wird besonders gravierend, wenn Partikel in die Kanäle eindringen und sie stabilisieren.

Aufgabe der Erfindung ist es, eine Radialwellendichtung mit zwei Dichtlippen anzugeben, die diesen Nachteil nicht aufweist.

Die Aufgabe wird durch eine Radialwellendichtung nach dem Hauptanspruch gelöst.

Der Spalt zwischen innerem ersten und äußerem zweiten Membrankörper wird bei der erfindungsgemäßen Dichtung auf der Druckseite von der zweiten Dichtmembran abgedeckt und durch den auf diese wirkenden Druck verschlossen. Fluide oder Partikel können nicht mehr in den Spalt eindringen.

Der Stützkörper ist vorzugsweise als Winkelring ausgebildet, dessen radialer Schenkel der zweiten Dichtmembran zugewandt ist und diese abstützt.

Die Druckabstützung fungiert auch als Sicherungsring, indem sie die inneren Teile der Dichtung im äußeren zweiten Membrankörper festhält. Sie ist bevorzugt scheibenförmig ausgebildet.

Stützkörper und Druckabstützung bestehen aus einem festen Material, beispielsweise einem Metall wie Stahl oder Edelstahl.

Die Membrankörper bestehen vorzugsweise aus einem elastischen Material, beispielsweise einem elastomeren Kunststoff. Geeignet sind insbesondere Fluoroelastomere, beispielsweise Viton (ISO-Kennzeichen FPM), und Nitrilkautschuk, der ggf. hydriert sein kann, beispielsweise Therban (ISO-Kennzeichen HNBR). Diese Elastomere können mit üblichen Verfahren, wie Schwefel- oder Peroxidvulkanisation, vernetzt sein.

Das elastomere Material der Dichtmembranen mit den Dichtlippen, ggf. auch der gesamten Membrankörper, enthält vorzugsweise Partikel eines schmierenden Feststoffs. Besonders bevorzugt sind hierfür Graphit und Polytetrafluorethylen (PTFE).

Vorteilhaft wird der Raum zwischen den beiden Dichtmembranen mit einem Schmiermittel gefüllt. Dieses kann sowohl zur Dauerschmierung, wenn das auf der Druckseite vorhandene fluide Medium keine Schmiereigenschaft hat, als auch zur Notschmierung bei Trockenlauf dienen.

Bei einer bevorzugten Ausführungsform ist ein dritter Membrankörper vorgesehen, der sich innerhalb des ersten Membrankörpers mit einer Dichtmembran befindet, deren die Welle berührende Dichtlippe von der Druckrichtung weg weisend schräg gestellt ist. Dieser Membrankörper dichtet den Behälter für das abzudichtende fluide Medium gegen den äußeren Luftdruck ab, wenn im Behälter ein Unterdruck herrscht, was beispielsweise beim ersten Einfüllen das Mediums mit typisch 2 bis 20 hPa vorkommen kann. Die ersten und zweiten Dichtlippen werden wegen ihrer Schrägstellung nämlich in diesem Fall durch den äußeren Luftdruck von der Welle abgehoben und lassen die Außenluft in den Behälter eintreten, sodass das Einfüllen, beispielsweise durch Ansaugen, verhindert oder zumindest stark verzögert wird.

Die Dichtmembran des dritten Membrankörpers stützt sich bevorzugt auf der druckabgewandten Seite des Stützkörpers axial ab. Um eine axiale Verschiebung im drucklosen Zustand zu verhindern, ist die Dichtmembran des dritten Membrankörpers vorteilhaft am radial äußeren Rand zu einem axialen Schenkel abgewinkelt, der sich auf die Druckseite des ersten Membrankörpers stützt. Zur radialen Fixierung ist der axiale Schenkel zweckmä-ßig in den ersten Membrankörper oder ggf. den axialen Schenkel des Stützkörpers eingepasst.

Die Dichtlippe des dritten Membrankörpers ist vorteilhaft so bemessen, dass sie ohne Druck an der Welle anliegt. Dadurch wird ein Beitrag des dritten Membrankörpers zur Verlustleistung durch Reibung im Druckbetrieb vermieden.

Der dritte Membrankörper kann aus den gleichen Materialien, wie sie oben für den ersten und zweiten Membrankörper genannt wurden, bestehen. Da er aber nur während des Befüllens bei stehender Welle mit Druck an dieser anliegt, braucht das Material keine schmierenden Feststoffpartikel zu enthalten. Geeignet ist beispielsweise auch einfacher Acrylnitril-Butadien-Kautschuk (NBR).

Ein Vorteil der erfindungsgemäßen Radialwellendichtung besteht darin, dass beim Zusammenbau die innen liegenden Teile sämtlich von einer Seite, d.h. von der druckabgewandten Seite her, in den äußeren zweiten Membrankörper eingelegt werden können. Dies gilt ggf. auch für den dritten Membrankörper. Dadurch wird die Herstellung erleichtert. Bei der bekannten Dichtung nach Figur 2 ist dies wegen des T-Profils des äußeren Membrankörpers nicht möglich.

Ein weiterer Vorteil bei der Montage der erfindungsgemäßen Dichtung ist, dass sie beim Einpressen in die Lageraufnahme unter axialem Druck intakt bleibt. Der axiale Druck ist notwendig, weil der elastische zweite Membrankörper ein gewisses Übermaß aufweist und durch Presssitz in der Lageraufnahme fixiert wird. Bei der bekannten Dichtung (Figur 2) ist der druckseitige Membrankörper vor der Montage im anderen Membrankörper axial beweglich. Dadurch besteht die Gefahr, dass er an der Welle hängen bleibt und sich gegen den anderen Membrankörper verschiebt, sodass die Dichtung auseinander fällt bzw. das vorgesehene axiale Maß überschreitet. Zumindest sitzt der druckseitige Membrankörper nicht mehr fest und das unter Druck stehende Medium kann leichter durch den Spalt zwischen den Membrankörpern durchtreten.

Die erfindungsgemäße Radialwellendichtung kann zur Abdichtung von Wellendurchführungen in Behälter, die ein unter Druck stehendes fluides Medium enthalten, verwendet werden. Besonders geeignet ist sie zur Abdichtung von Wellen bei Wasserpumpen, insbesondere für Verbrennungsmotoren in Kraftfahrzeugen.

Die Erfindung wird anhand eines in der beigegebenen Figur 1 dargestellten Ausführungsbeispiels näher erläutert. Figur 2 zeigt eine Radialwellendichtung nach dem oben beschriebenen Stand der Technik. Figur 3 zeigt eine bevorzugte Ausführungsform.

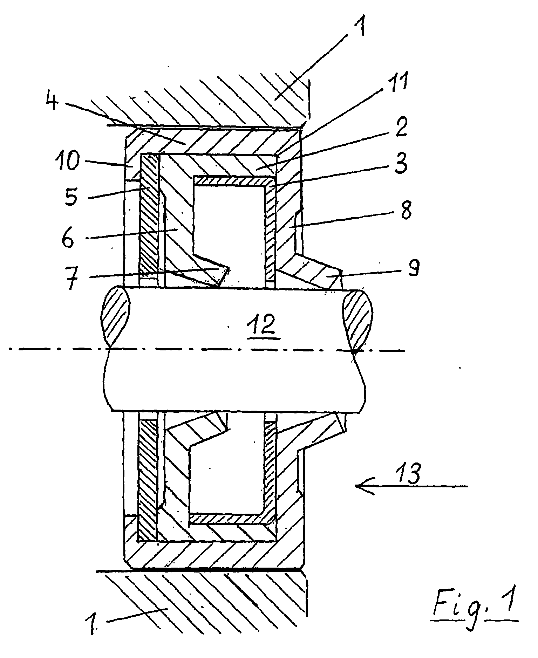

Figur 1 zeigt eine erfindungsgemäße Radialwellendichtung, die in die Lageraufnahme für eine Wellendurchführung in der Wand eines Behälters eingebaut ist, der im Betriebszustand mit einem unter Druck stehenden fluiden Medium, z. B. Kühlwasser, gefüllt ist. Der Druck des Mediums wirkt in Richtung des Pfeils 13 auf die Dichtung, während die gegenüberliegende Seite der Dichtung gewöhnlich mit der Außenluft kommuniziert.

Ein erster Membrankörper 2 aus einem elastomeren Material ist auf einen Stützkörper 3 in Form eines Winkelrings aufgezogen. An den ersten Membrankörper 2 ist eine erste Dichtmembran 6 mit einer ersten Dichtlippe 7 angeformt, die an der Welle 12 dichtend anliegt und schräg gegen die Druckrichtung gestellt ist. Ein zweiter Membrankörper 4, an den auf der Druckseite eine zweite Dichtmembran 8 mit einer ebenfalls schräg gegen die Druckrichtung gestellten und an der Welle anliegenden zweiten Dichtlippe 9 angeformt ist, umfasst radial außen den in ihn eingelegten ersten Membrankörper 2 mit dem Stützkörper 3. Auf der druckabgewandten Seite ist auf den ersten Membrankörper 3 eine Druckabstützung 5 in Form einer gelochten Scheibe aufgelegt. Diese wird von dem radial nach innen umgreifenden Rand 10 des zweiten Membrankörpers auf der druckabgewandten Seite axial fixiert. Die ganze Anordnung ist in die Lageraufnahme 1 eingesetzt, wobei das elastomere Material des zweiten Membrankörpers 4 aufgrund eines ausreichenden Übermaßes einen sicheren Presssitz bewirkt. Der Spalt 11 zwischen erstem und zweitem Membrankörper ist völlig von der zweiten Dichtmembran 8 abgedeckt.

In Figur 2 ist ein erster Membrankörper 20 mit einer ersten Dichtlippe 21 auf einem Stützkörper 22 aufgezogen und in den zweiten Membrankörper 23 eingesetzt. Diese hat ein T-förmiges Profil und läuft am Ende des Stützkörpers zu einer zweiten Dichtmembran mit Dichtlippe 27 aus. Zur Abstützung der zweiten Dichtmembran ist eine Druckabstützung 24 auf der druckabgewandten Seite aufgelegt, die vom umgreifenden Rand 25 des zweiten Membrankörpers axial fixiert wird. Zwischen erstem und zweitem Membrankörper ist ein Spalt 26 vorhanden, der zur Druckseite hin frei liegt. Man sieht auch, dass bei dieser Anordnung das Einsetzen des ersten Membrankörpers in den zweiten Membrankörper von der Druckseite aus erfolgen muss, während die Druckabstützung nur von der anderen Seite montierbar ist. Au-ßerdem ist der Membrankörper 20 im Membrankörper 23 beweglich, solange dieser nicht in die Lageraufnahme eingepresst ist.

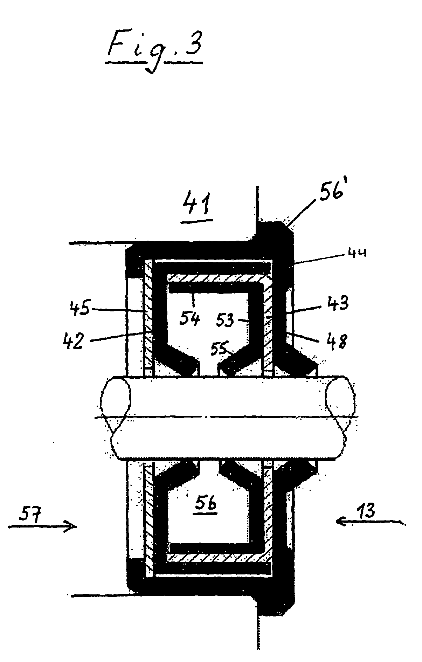

Figur 3 zeigt eine bevorzugte Ausführungsform der erfindungsgemäßen Dichtung mit einem dritten Membrankörper. Der erste Membrankörper 42 ist wiederum in den zweiten Membrankörper 44 eingelegt und durch die Druckabstützung 45 auf der druckabgewandten Seite axial gestützt. Der zweite Membrankörper weist hier einen radial außen liegenden Wulst 56' auf, der zusätzlich zum Presssitz eine weitere axiale Abstützung auf der Lageraufnahme 41 bewirkt. Ein solcher Wulst ist selbstverständlich auch bei anderen Ausführungsformen möglich. Die Membran des zweiten Membrankörpers liegt an der Druckseite des Stützkörpers 43 an und wird so gestützt. Der Stützkörper 43 ist ein Winkelring und liegt mit seinem axialen Schenkel innen am ersten Membrankörper 42 an. Der dritte Membrankörper 53 hat ebenfalls die Form eines Winkelrings und liegt an der druckabgewandten Innenseite des Stützkörpers 43 an. Sein axialer Schenkel reicht bis an den ersten Membrankörper 42. Dadurch ist eine axiale Bewegung des dritten Membrankörpers im Innenraum 56 nicht möglich. Der radiale Schenkel des dritten Membrankörpers ist an seinem Innenrand gegen die druckabgewandte Seite schräggestellt und bildet eine Dichtlippe 55, welche die Welle 52 berührt. Diese Dichtlippe ist so bemessen, dass sie keinen Druck auf die Welle ausübt, sodass bei drehender Welle keine Reibleistung auftritt. Wenn jedoch beim Einfüllen des Druckmediums bei stehender Welle im Inneren des abzudichtenden Pumpengehäuses auf der Seite der zweiten Dichtmembran 48 ein Unterdruck vorhanden ist, presst der unter der Dichtlippe des ersten Membrankörpers hindurchtretende Atmosphärendruck 57 die Dichtlippe 55 dichtend an die Welle an. Der Innenraum 56 der Dichtung ist mit Schmierfett gefüllt.

### Bezugszeichenliste

- 1: Lageraufnahme
- 2: erster Membrankörper
- 3: Stützkörper
- 4: zweiter Membrankörper
- 5: Druckabstützung
- 6: erste Dichtmembran
- 7: erste Dichtlippe
- 8: zweite Dichtmembran
- 9: zweite Dichtlippe
- 10: Rand
- 11: Spalt
- 12: Welle
- 13: Richtung des Drucks im Behälter
- 20: erster Membrankörper
- 21: erste Dichtlippe
- 22: Stützkörper
- 23: zweiter Membrankörper
- 24: Druckabstützung
- 25: Rand
- 26: Spalt
- 27: zweite Dichtmembran
- 41: Lageraufnahme
- 42: erster Membrankörper
- 43: Stützkörper
- 44: zweiter Membrankörper
- 45: Druckabstützung
- 48: zweite Dichtmembran
- 52: Welle
- 53: radialer Schenkel des dritten Membrankörpers
- 54: axialer Schenkel des dritten Membrankörpers
- 55: Dichtlippe des dritten Membrankörpers
- 56: Innenraum der Dichtung
- 57: Druck der Außenluft
- 56': Wulst

## Patentansprüche

1. Radialwellendichtung mit einem ersten Membrankörper (2; 42), der eine erste Dichtmembran (6) mit einer an einer Welle (12; 52) dichtend anlegbaren und entgegen der Druckrichtung (13) schräg gestellten ersten Dichtlippe (7) aufweist, und der auf der dem Druck abgewandten Seite von einer Druckabstützung (5; 45) gestützt wird, und einem zweiten Membrankörper (4; 44), der in Druckrichtung (13) in einem Abstand von der ersten Dichtmembran (6) eine zweite Dichtmembran (8; 48) mit einer an der Welle (12; 52) anlegbaren und entgegen der Druckrichtung (13) schräg gestellten zweiten Dichtlippe (9) aufweist, wobei ein Stützkörper (3; 43) die zweite Dichtmembran (8; 48) abstützt,
**dadurch gekennzeichnet, daß** der erste Membrankörper (2; 42) auf den Stützkörper (3; 43) aufgezogen ist, daß der Stützkörper (3; 43) mit dem ersten Membrankörper (2; 42) und der Druckabstützung (5; 45) in den zweiten Membrankörper (4; 44) eingelegt sind, und daß die Druckabstützung (5; 45) zwischen dem ersten Membrankörper (2; 42) und dem radial nach innen umgreifenden Rand (10) des zweiten Membrankörpers (4; 44) axial fixiert ist.

2. Radialwellendichtung nach Anspruch 1, **dadurch gekennzeichnet, dass** der Stützkörper (3; 43) als Winkelring ausgeführt ist, dessen radialer Schenkel der zweiten Dichtmembran (8; 48). zugewandt ist.

3. Radialwellendichtung nach Anspruch 1 oder 2, **dadurch gekennzeichnet, dass** die Druckabstützung (5; 45) scheibenförmig ausgebildet ist.

4. Radialwellendichtung nach Anspruch 1 bis 3, **dadurch gekennzeichnet, dass** die erste und/oder die zweite Dichtmembran (6, 8; 48) aus einem elastomeren Material besteht, das Partikel eines schmierenden Feststoffs enthält.

5. Radialwellendichtung nach Anspruch 4, **dadurch gekennzeichnet, dass** die Partikel aus Graphit oder PTFE bestehen.

6. Radialwellendichtung nach Anspruch 1 bis 5, **dadurch gekennzeichnet, dass** der Raum (56) zwischen den beiden Dichtmembranen (6, 8 ; 48) mit einem Schmiermittel gefüllt ist.

7. Radialwellendichtring nach Anspruch 1 bis 6, **dadurch gekennzeichnet, dass** sich innerhalb des ersten Membrankörpers (42) ein dritter Membrankörper befindet, dessen Dichtmembran (53) eine von der Druckrichtung (13) hinweg schräg gestellte, die Welle (52) berührende Dichtlippe (55) aufweist.

8. Radialwellendichtring nach Anspruch 7, **dadurch gekennzeichnet, dass** die sich Dichtmembran (53) des dritten Membrankörpers auf die druckabgewandte Seite des Stützkörpers (43) stützt.

9. Radialwellendichtring nach Anspruch 8, **dadurch gekennzeichnet, dass** der dritte Membrankörper am radial äußeren Rand seiner Dichtmembran (53) zu einem axialen Schenkel (54) abgewinkelt ist, der sich auf die Druckseite des ersten Membrankörpers (42) stützt.

10. Radialwellendichtring nach Anspruch 9, **dadurch gekennzeichnet, dass** der axiale Schenkel (54) des dritten Membrankörpers in den ersten Membrankörper (42) oder in den axialen Schenkel des Stützkörpers (43) eingepasst ist.

11. Radialwellendichtring nach Anspruch 7 bis 10, **dadurch gekennzeichnet, dass** die Dichtlippe (55) des dritten Membrankörpers ohne Druck an der Welle (52) anliegt.

## Claims

1. Rotary shaft seal with a first diaphragm body (2; 42), which has a first sealing diaphragm (6) with a first sealing lip (7) that is in tight contact with a shaft (12; 52) and inclined against the pressure direction (13), and which is supported on the unpressurised side by a pressure mount (5; 45), and a second diaphragm body (4; 44), which has a second sealing diaphragm (8; 48) that is located at a distance from the first sealing diaphragm (6) in the pressure direction (13) and has a second sealing lip (9) resting against the shaft (12; 52) and inclined against the pressure direction (13), a support element (3; 43) supporting the second sealing diaphragm (8; 48)
**characterised in that** the first diaphragm body (2; 42) is mounted on the support element (3; 43), that the support element (3; 43) with the first diaphragm body (2; 42) and the pressure mount (5; 45) are inserted into the second diaphragm body (4; 44) and that the pressure mount (5; 45) is held in place axially between the first diaphragm body (2; 42) and the inward-facing encompassing edge (10) of the second diaphragm body (4; 44).

2. Rotary shaft seal according to Claim 1, **characterised in that** the support element (3; 43) is designed as an angle ring, whose radial leg faces the second sealing diaphragm (8; 48).

3. Rotary shaft seal according to Claim 1 or 2, **characterised in that** the pressure mount (5; 45) is of disk-shaped design.

4. Rotary shaft seal according to Claims 1 to 3, **characterised in that** the first and/or second sealing diaphragm (6, 8; 48) is made of an elastomeric material containing particles of a lubricating solid.

5. Rotary shaft seal according to Claim 4, **characterised in that** the particles consist of graphite or PTFE.

6. Rotary shaft seal according to Claims 1 to 5, **characterised in that** the space (56) between the two sealing diaphragms (6, 8; 48) is filled with a lubricant.

7. Rotary shaft seal according to Claims 1 to 6, **characterised in that** a third diaphragm body is provided inside the first diaphragm body (42) and has a sealing diaphragm (53), whose sealing lip (55) is in contact with the shaft (52) and inclined away from the pressure direction (13).

8. Rotary shaft seal according to Claim 7, **characterised in that** the sealing diaphragm (53) of the third diaphragm body is supported on the unpressurised side of the support element (43).

9. Rotary shaft seal according to Claim 8, **characterised in that** the sealing diaphragm (53) of the third diaphragm body is angled on the outer, radial edge to form an axial leg (54), which rests against the pressure side of the first diaphragm body (42).

10. Rotary shaft seal according to Claim 9, **characterised in that** the axial leg (54) of the third diaphragm body is fitted into the first diaphragm body (42), or in the axial leg of the support element (43).

11. Rotary shaft seal according to Claims 7 to 10, **characterised in that** the sealing lip (55) of the third diaphragm body rests against the shaft (52) without pressure.

## Revendications

1. Joint radial pour arbre tournant, comportant un premier corps à membrane (2 ; 42) qui présente une première membrane d'étanchéité (6) avec une première lèvre d'étanchéité (7) susceptible d'être appliquée de manière étanche sur un arbre (12 ; 52) et disposée en oblique à l'inverse de la direction de pression (13), et qui est soutenu par un support de pression (5 ; 45) du côté détourné de la pression, et comportant un deuxième corps à membrane (4 ; 44) qui présente, en direction de pression (13) et à une distance de la première membrane d'étanchéité (6), une deuxième membrane d'étanchéité (8 ; 48) avec une deuxième lèvre d'étanchéité (9) susceptible d'être appliquée sur l'arbre (12 ; 52) et disposée en oblique à l'inverse de la direction de pression (13), un corps de soutien (3 ; 43) soutenant la deuxième membrane d'étanchéité (8 ; 48),
**caractérisé en ce que** le premier corps à membrane (2 ; 42) est enfilé sur le corps de soutien (3 ; 43), **en ce que** le corps de soutien (3 ; 43) avec le premier corps à membrane (2 ; 42) et le support de pression (5 ; 45) sont insérés dans le deuxième corps à membrane (4 ; 44), et **en ce que** le support de pression (5 ; 45) est fixé axialement entre le premier corps à membrane (2 ; 42) et le bord (10) à enveloppement radial vers l'intérieur, du deuxième corps à membrane (4 ; 44).

2. Joint radial pour arbre tournant selon la revendication 1, **caractérisé en ce que** le corps de soutien (3 ; 43) est réalisé sous forme de bague angulaire dont la branche radiale est tournée vers la deuxième membrane d'étanchéité (8 ; 48).

3. Joint radial pour arbre tournant selon la revendication 1 ou 2, **caractérisé en ce que** le support de pression (5 ; 45) est réalisé en forme de disque.

4. Joint radial pour arbre tournant selon l'une des revendications 1 à 3, **caractérisé en ce que** la première membrane d'étanchéité et/ou la deuxième membrane d'étanchéité (6, 8 ; 48) est en un matériau élastomère qui comprend des particules d'une matière solide lubrifiante.

5. Joint radial pour arbre tournant selon la revendication 4, **caractérisé en ce que** les particules sont en graphite ou en PTFE.

6. Joint radial pour arbre tournant selon l'une des revendications 1 à 5, **caractérisé en ce que** l'espace (56) entre les deux membranes d'étanchéité (6. 8 ; 48) est rempli d'un lubrifiant.

7. Joint radial pour arbre tournant selon l'une des revendications 1 à 6, **caractérisé en ce qu'**à l'intérieur du premier corps à membrane (42) se trouve un troisième corps à membrane dont la membrane d'étanchéité (53) présente une lèvre d'étanchéité (55) disposée en oblique à l'inverse de la direction de pression (13) et touchant l'arbre (52).

8. Joint radial pour arbre tournant selon la revendication 7, **caractérisé en ce que** la membrane d'étanchéité (53) du troisième corps à membrane prend appui sur le côté, détourné de la pression, du corps de soutien (43).

9. Joint radial pour arbre tournant selon la revendication 8, **caractérisé en ce que** le troisième corps à membrane est coudé au bord radialement extérieur de sa membrane d'étanchéité (53) pour former une branche (54) axiale qui prend appui sur le côté pression du premier corps à membrane (42).

10. Joint radial pour arbre tournant selon la revendication 9, **caractérisé en ce que** la branche (54) axiale du troisième corps à membrane est ajustée dans le premier corps à membrane (42) ou dans les branchés axiales du corps de soutien (43).

11. Joint radial pour arbre tournant selon les revendications 7 à 10, **caractérisé en ce que** la lèvre d'étanchéité (55) du troisième corps à membrane repose sans pression sur l'arbre (52).
